# EUROPEAN PATENT SPECIFICATION

(11) **EP 0 589 878 B1**
(45) Date of publication and mention of the grant of the patent: **13.03.1996**
(21) Application number: 91913902.2
(22) Date of filing: 19.06.1991
(51) Int. Cl.: A61C 8/00

(54) **A DEVICE FOR TOOTH IMPLANTATION COMPRISING A LOCKING SCREW**
VORRICHTUNG MIT SELBSTSICHERNDEM SCHRAUBENBOLZEN ZUM IMPLANTIEREN EINES ZAHNS
DISPOSITIF D'IMPLANTATION DE DENT A VIS DE BLOCAGE

(43) Date of publication of application: 06.04.1994
(73) Proprietor: Nobelpharma AB, S-402 26 Göteborg (SE)
(72) Inventor: KVIST, Björn, S-761 73 Norrtälje (SE)
(74) Representative: Rosenquist, Per Olof
(86) International application number: PCT/SE91/00442
(87) International publication number: WO 92/22260

(56) References cited:
- EP-A- 0 000 549
- EP-A- 0 216 031
- EP-A- 0 400 224
- SE-B- 465 701

## Description

The present invention relates to a device for tooth implantation comprising a fixture part intended to be set into the jawbone, and a holder part to which the tooth crown is attached. The holder part and the fixture part can be linked together by an attachment screw.

The tooth implantation of the above mentioned type is successfully used for tooth bridges. When using this technique for single tooth implantation problems arise. The screw attaching the holder part carrying the tooth crown to the fixture part often becomes loose as a result of uneven loads on the tooth. When the tooth crown begins to get loose from the fixture part, the canal to the attachment screw must be bored, so that the screw can be tightened whereupon the canal is again filled. When the tooth crown is getting loose, there are often increasing bacterial problems around the implantation. Because of these problems it has been very difficult to use the previously known technique of implantation for a single tooth.

In EP-A-0 400 224, which forms the preamble of Claim 1, an attempt was made in order to solve the above mentioned problem.

The purpose of the present invention is to solve the above mentioned problem and provide a device for tooth implantation which makes a permanent locking of the implantation structure possible also for single tooth implantation.

This purpose is obtained by a device of the kind stated in the introduction and having the characteristics of Claim 1.

According to an advantageous further development of the device according to the invention, the holder part presents a conical portion on which the tooth crown is cemented. If this portion is cylindric it will be difficult to get the crown down to the holder part to the intended fixed position. This can result in the formation of pockets between the crown and the soft tissue after the cementation of the tooth with increasing bacterial problems as a consequence. These problems are thus solved by making the portion in question of the holder part conical. The optimum cone angle is 5° - 15°.

According to another advantageous embodiment of the device according to the invention the cross section of the conical portion of the holder part is non circular, preferably quadrangular with rounded out corners or hexagonal, so that the tooth crown cannot rotate on the holder part after being mounted.

An embodiment of the device according to the invention chosen as an example will now be described more in detail with reference to the enclosed drawings on which figure 1 shows the fixture part set into the jawbone, figure 2 depicts the holder part in enlarged scale to which part the tooth crown is intended to be attached and which part is intended to be screwed on the fixture part, figure 3 illustrates a single tooth implantation, and figure 4 shows an alternatively designed holder part.

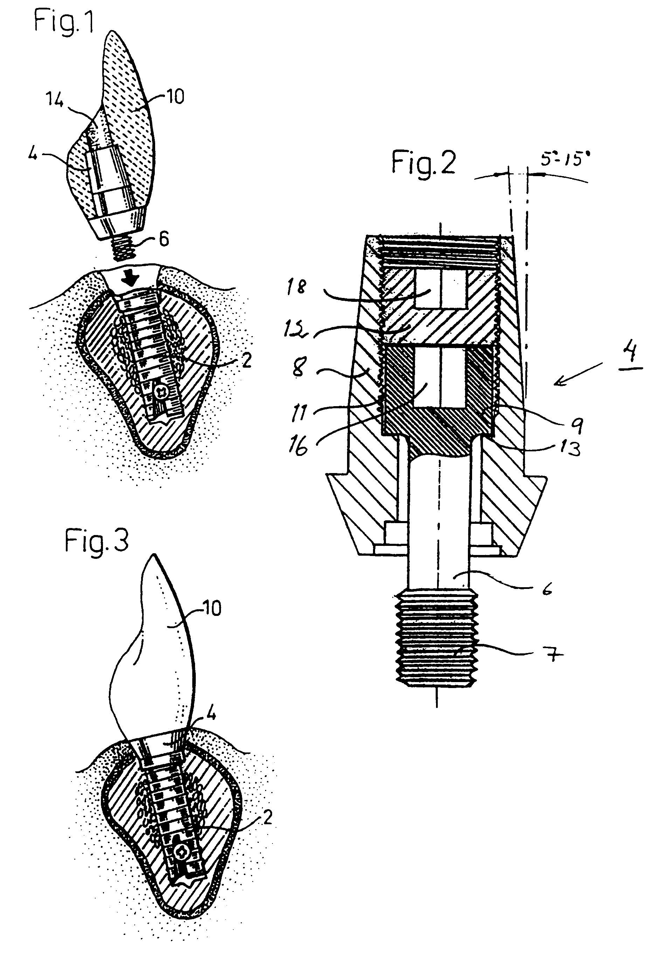

In figure 1 the fixture part is shown in the form of a threaded anchoring unit 2 made of titanium and set into the jawbone.

Figure 2 discloses the holder part 4 which is intended to be screwed on the fixture part 2 by an attachment screw 6 located at the bottom region of the holder part, a threaded end portion 7 of said attachment screw being threaded into a central canal in the fixture part 2.

The opposite end portion of the attachment screw 6 is formed as a head portion 9. The diameter of this head portion is slightly less than the inner diameter of the canal formed in the conical portion 8 of the holder part 4, so that a clearance 11 is formed between head portion and the canal. Thus, the attachment screw 6 can be freely introduced into the canal in the holder part 4 till the transverse surface 13 of the head portion 9 bears against a corresponding shoulder in the canal of the holder part 4 where the diameter of the canal is changed.

The canal in the conical portion of the holder part 4 is provided with an internal thread, oppositely threaded to the threaded portion 7 of the attachment screw 6, such that a locking screw can be screwed into the canal to the bear against the attachment screw. As the attachment screw 6 and the locking screw 12 are oppositely threaded the locking screw will lock the attachment screw 6 when it tends to unscrew and secure the attachment screw in place.

The threaded end portion 7 of the attachment screw is suitably right-threaded, while the locking screw is formed as a left-threaded screw. Thus, the locking screw 12 will lock the attachment screw 6 if it tends to unscrew, as mentioned above.

In the upper portions of the screws there is a square recess 16 and 18 respectively in which a matched screw tool can be inserted for tightening the screws. Of course the recesses can be of another shape, e.g. of triangular or hexagonal shape.

The holder part 4 presents a conical portion 8 on which the tooth crown itself is intended to be attached by an adhesive, cement or by porcelain burning.

As a consequence of uneven loads on the tooth crown when chewing the attachment screw 6 has, as mentioned above, a tendency to get loose and to prevent this a locking screw 12 is screwed into the canal against the attachment screw 6.

The holder part 4 is mounted on the fixture part 2 by a sterile procedure and the cross section of the conical section 8 is non-circular, e g quadrangular or hexagonal, so that rotation of the tooth crown 10 on the conical portion 8 is avoided.

The attachment screw 6 and the locking screw 12 are tightened through a canal 14 through the tooth crown 10, said canal 14 thereafter being filled with a suitable filling material.

A completed tooth implantation is illustrated in figure 3.

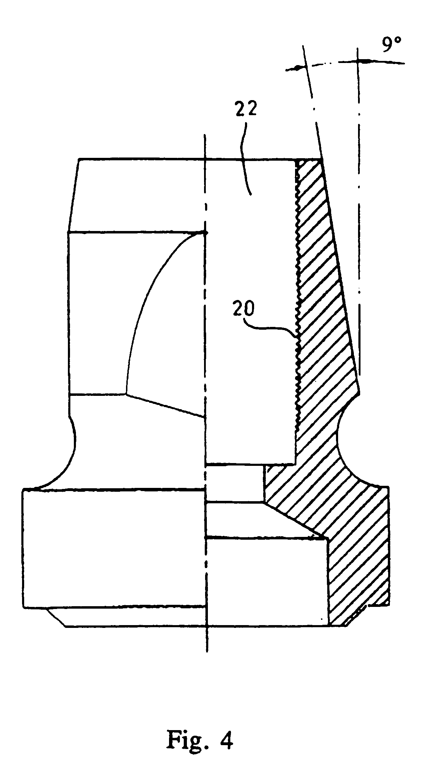

Figure 4 illustrates the invention with a differently designed holder part for the tooth crown. The right half of the figure shows the holder part in cross-section and the left half is a side elevation view. Also in this case the holder part and the fixture part are linked by an ordinarily right-threaded attachment screw. In the holder part the outer portion of the canal is provided with an internal thread oppositely threaded to the thread of the attachment screw. By screwing, after tightening the holder part by the attachment screw, of an oppositely threaded locking screw in the threaded portion 22 of the canal, such that the locking screw will bear against the attachment screw, this screw will be locked if it tends to unscrew.

The invention is described above applied to a single tooth implantation. Even if the problem with a loosening attachment screw, as mentioned above, is most severe for single tooth implantations, also for bridges the attachment screws will have a tendency to get loose in spite of the fact that adjacent teeth will lock each other against movement. Thus the invention can also be used for implantation of tooth bridges to eliminate this problem also in such constructions.

## Claims

1. A device for tooth implantation, comprising a fixture part (2) intended to be set into the jawbone, and a holder part (4) to which the tooth crown (10) is attached, which holder part can be screwed on the fixture part by an attachment screw (6), **characterized in** that the attachment screw (6) has a threaded end portion (7) to be threaded into a central bore in the fixture part (2) and a head portion (9) to be placed in a threaded bore in the holder part (4) including the tooth crown, bearing against a shoulder (13) in said bore, and in that a locking screw (12) is provided to lock the attachment screw (6) for the fastening of the holder part (4) to the fixture part (2) against unscrewing after screwing the holder part on the fixture part, the attachment screw (6) and the locking screw (12) being oppositely threaded, said locking screw being formed to be screwed against the attachment screw after screwing the holder part on the fixture part.

2. The device according to claim 1, said implantation comprising a plurality of teeth forming a bridge secured to the fixture part by a plurality of screws, **characterized in** that locking screws are disposed to lock at least some of the attachment screws.

## Patentansprüche

1. Vorrichtung zur Zahnimplantation, umfassend ein Befestigungsteil (2) zum Einsetzen in den Kieferknochen und ein Halteteil (4), an dem die Zahnkrone (10) befestigt wird, welches mittels einer Befestigungsschraube (6) an das Befestigungsteil geschraubt werden kann,
**dadurch gekennzeichnet**, **daß**
die Befestigungsschraube (6) ein Gewindeende (7) zum Schrauben in eine Zentrierbohrung im Befestigungsteil (2) und ein Kopfteil (9) zum Plazieren in einer Gewindebohrung im Halteteil (4) aufweist, das die Zahnkrone enthält, wobei das Kopfteil sich gegen einen Absatz (13) in der Bohrung abstützt, und daß eine Verriegelungsschraube (12) vorgesehen ist, um die Befestigungsschraube zum Verriegeln des Halteteils (4) am Befestigungsteil (2) gegen Lockern nach dem Schrauben des Halteteils auf das Befestigungsteil festzusetzen, wobei die Befestigungsschraube (6) und die Verriegelungssschraube (12) mit gegenläufigen Gewinden versehen sind, und wobei die Verriegelungsschraube ausgebildet ist, um nach Aufschrauben des Halteteils auf das Befestigungsteil gegen die Befestigungsschraube geschraubt zu werden.

2. Vorrichtung gemäß Anspruch 1, wobei die Implantation eine Mehrzahl von Zähnen aufweist, die eine Brücke bilden, die am Befestigungsteil mit mehrereren Schrauben befestigt ist,
**dadurch gekennzeichnet**, **daß**
Verriegelungsschrauben zum Verriegeln zumindest einiger der Befestigungsschrauben angeordnet sind.

## Revendications

1. Dispositif pour l'implantation d'une dent, comprenant une partie d'ancrage (2) destinée à être ajustée dans l'os maxillaire, et une partie de support (4) à laquelle est fixée la couronne dentaire (10), laquelle partie de support peut être vissée sur la partie d'ancrage au moyen d'une vis de fixation (6), caractérisé en ce que la vis de fixation (6) comporte une partie d'extrémité filetée (7) destinée à être vissée dans un alésage central formé dans la partie d'ancrage (2) et une partie de tête (9) destinée à être placée dans un orifice fileté formé dans la partie de support (4) comprenant la couronne dentaire, en portant contre un épaulement (13) dans ledit alésage, et en ce que une vis de verrouillage (12) est prévue de façon à verrouiller la vis (6) de fixation pour amarrer la partie de support (4) à la partie d'ancrage (2) en empêchant le dévissage après vissage de la partie de support sur la partie d'ancrage, la vis de fixation (6) et la vis de verrouillage (12) ayant des sens de filetage opposés, ladite vis de verrouillage étant formée de façon à être vissée contre la vis de fixation après vissage de la partie de support sur la partie d'ancrage.

2. Dispositif selon la revendication 1, ladite implantation comprenant une pluralité de dents formant un bridge fixé à la partie d'ancrage par une pluralité de vis, caractérisé en ce que des vis de verrouillage sont disposées de façon à verrouiller au moins certaines des vis de fixation.
